(19) Europäisches Patentamt / European Patent Office / Office européen des brevets

(11) **EP 2 306 402 A1**

(12) **EUROPEAN PATENT APPLICATION**

(43) Date of publication:
**06.04.2011 Bulletin 2011/14**

(51) Int Cl.:
***G06T 11/00*** *(2006.01)*

(21) Application number: **09075412.8**

(22) Date of filing: **25.08.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicants:
• **Emid, Soemar**
  **2718 AX Zoetermeer (NL)**
• **Emid-Danoesastro, Annie**
  **2718 AX Zoetermeer (NL)**

• **Hartini Emid, Joyce**
  **2718 AX Zoetermeer (NL)**
• **Emid, Alain S.R.**
  **46190 Riba-Roja (ES)**

(72) Inventor: **Emid, Soemar**
  **Zoetermeer, 2718 AX (NL)**

Remarks:
Amended claims in accordance with Rule 137(2) EPC.

(54) **Exact image reconstruction method**

(57)    From the exact cosine expressions of the normal parallel projections of the object into the Radon space, the image is directly reconstructed from the set of cosines, by identifying the maxima or minima of the cosines as the image points, having the coordinates of the object points, with the corresponding weights, while removing the remainder of the corresponding cosines from the sinogram. By using object points on the intersections of radials with concentric circles and exploiting the radial and angular relationships of points on subsequent Radon slices, the computation can be reduced by two orders of magnitude, compared to usual back projection. The computation can also be done in advance and stored. The method is therefore highly efficient and is applicable to medical imaging, like X-CT, PET, SPECT, MRI, and to synthetic aperture radiometry, passive and active, like radar and derived methods.

Fig. 2a

$R$

$\rho$

$rcos(\varphi-\theta)$

$0$

$r$

$0$    $\theta$    $\longrightarrow \varphi$    $\pi$

Fig. 2b

2

1

5

3

$0$    $\theta$    4    $\longrightarrow \varphi$    $\pi$

Fig. 2c: cosinogram in $R$

2

5

3    1

4

Fig. 2d: Image in $P$

**Description**

The invention is in the field of image reconstruction from projection, with applications in medical imaging modalities and synthetic aperture radiometry.

History.

Since more than three decades image reconstruction by PR (projection reconstruction) is widely applied in medicine with CT (computerized tomography) [1], like X-CT with X-rays, PET (positron emission tomography), SPECT (single photon emission CT), MRI (magnetic resonance imaging) [2], Utrasound, OCT (optical coherence tomography), but also in interferometric radiometry, like synthetic aperture Radar and radio astronomy. In projection reconstruction, well established with the Radon-Hough transform [3-5], the object to be imaged is first projected onto a parameter space, the Radon space, and for normal parallel beam projection the projections form a sinogram, as a point of the object is transformed into a sinusoid in the parameter space. Next, image reconstruction is done by the FBP (filtered back projection) algorithm, see e.g. [6]. This PR-FBP algorihm has been developed to a high standard, albeit computationally slow, and applied in the above mentioned imaging modalities. An extensive description of this prior art is found in [6], which gives also many references to the literature.

A different approach than the usual FBP [6] for image reconstruction was undertaken in [7,8] with the Inverse Hough Transform, in which the maximum of the sinusoid was identified in a numerical procedure distinguishing parts of the sinusoid into left and right classes, but they did not give the exact expressions of the sinusoids and the numerical procedure has not resulted in a clear cut outcome.

Disclosure of inventive step.

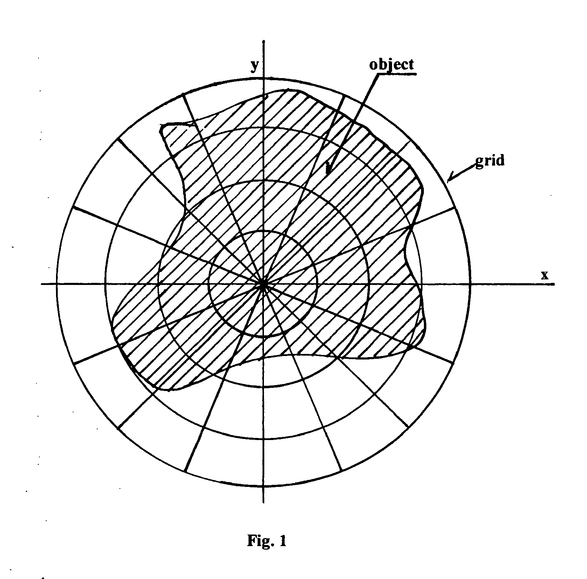

In this disclosure, the exact expressions of the transformations of the points in the different spaces are given, and the one-to-one correspondence of a point in the object with a point in Radon space and this in turn with a point in the image space are denoted. To be definite a 2D (2 dimensional) object of NxN data points, N even, is considered as an example. Each point has its proper weight (including zero where there is no object). The object is of arbitrary form, Fig. 1 as an illustration.

Representations and transformations.

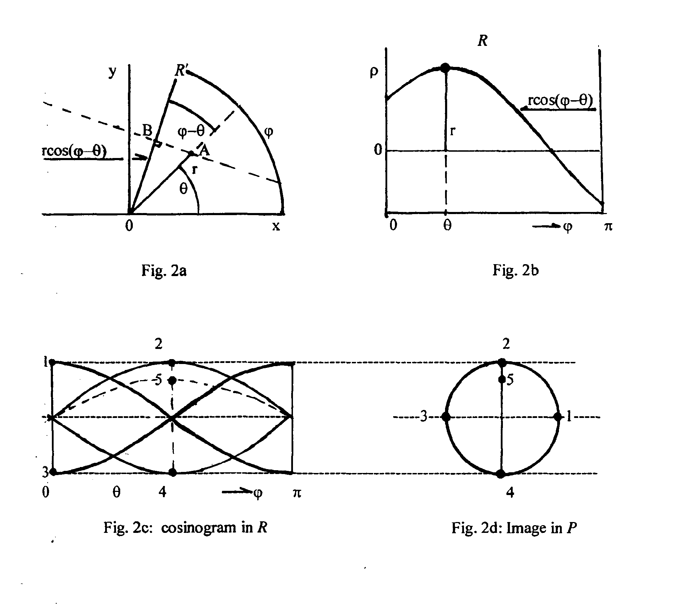

Representation of points, of the object, in different coordinate systems is done in the following way. A point A $(x,y)$ in the Cartesian coordinate system $C(x,y)$ is represented as $A(r,\theta)$ in the polar coordinate system $P(r,\theta)$, Fig. 2a with :

$$x = r\cos\theta \ \text{ and } \ y = r\sin\theta, \ \text{from which: } \ dx \, dy \ = \ r \, dr \, d\theta \qquad\qquad \text{eq.(1)}$$

where the polar coordinate system $P(r,\theta)$ is obtained by rotation of $C(x,y)$ over $\theta$, which conserves the measure/dimensions, as meant to be, in order not to get distortion of the image, with the determinant of the transformation matrix equal to 1.

Consider the polar coordinate system $R'(\rho,\varphi)$, rotating over $P(r,\theta)$, over an angle $\varphi$. $R'$ is like a carrousel (merry-go-round) moving over a fixed polar platform $P$. Points on $P$ are registered on $R'$ as in trigonometry, i.e. OB in $R'$, see Fig. 2a, gives exactly:

$$\textbf{OB} = \rho \ = \ r\cos(\varphi - \theta), \quad 0 \le \varphi < \pi, \ (\text{ with } 0 \le \theta < \pi) \qquad\qquad \text{eq.(2)}$$

for all points on the normal in AB, drawn in Radon space $R$ as Fig. 2b for one point, for clarity (the boundary limit $< \pi$ instead of $\le \pi$ in eq.(2) is to avoid double counting). In eq.(2) each point of the object is represented in the Radon space, as a specific **cosine,** not just a sinusoid as usually stated in Radon transform literature. In normal Radon transform, each value of the angle $\theta$ denotes the orientation of the object, whereas $\varphi$ denotes the orientation of the Radon slice along OB in eq.(2). Therefore, the set of cosines, eq.(2) of all the Radon slices in $R$ , is now called a **cosinogram,** rather than sinogram, to be more specific and to enable its effective use, as readily follows. From eq.(2) it follows that in the Radon space the unique maximum, or minimum, of the cosine, which is exactly for:

$$\rho = r \quad \text{and} \quad \varphi = \theta \qquad\qquad\qquad \text{eq.(3)}$$

serves to identify the corresponding point $A(r,\theta)$ of the object to be imaged. From eq.(2) and eq.(3) it follows that at and near the identification points in the Radon space, corresponding one-to-one to the points of the object, the measure preserving relation $d\rho\, d\varphi = dr\, d\theta$ holds.

Image reconstruction.

Image reconstruction starts after data acquisition is completed. The Radon slices as a function of $\varphi$ form the cosinogram. From eq.(2), eq.(3) and Fig. 2b it follows that for the reconstruction of the image, each point of the image $I(r,\theta)$ of the object $A(r,\theta)$ is found as the maximum, or minimum, of the cosine, which is at $\rho = r$ and $\varphi = \theta$ in Radon space $R$ . This point can be found from the cosinogram by sequential horizontal scans, simultaneously from above and below, from absolute value large to small $\rho$, which correspond to concentric circles in $P,$ starting from the external parts of the object. There are N/2 scans by symmetric positioning of the grid, Fig.1 (the position of the object is not restricted by this choice), from large to small radius, positive and negative. There are 2N points per double scan (N points from above, N from below) ordered according to $0 \le \theta < \pi$ on the cosinogram. See Fig. 2c and Fig. 2d as illustration. At each scan, for each point found for the image, that point with its proper weight is retained as image point, and the rest of the cosine multiplied by the weight are deleted from the cosinogram.

In the cosinogram, data for the inner part of the object are, as it were, buried under the data of the outer parts, see e.g. Fig 2c, point number 5. By scanning from above and below, the cosinogram is peeled off from the outside, removing all that belong to the outer parts, without interference from data from the inside, but also without removing data that belong to the inner part. So the remaining cosinogram does belong only to the inner part, cleaned from remainders of the outer part. This is easily seen for point number 5. The peeling off and simultaneous cleaning continue until N/2 scans have been completed. For N even, the centre line of the cosinogram, which is the origin of the grid, is not included as in this case the origin is not a data point; it is for N odd.

As the successive transformations involved preserve measure, and the representations have a one-to-one correspondence, the reconstructed image is an exact representation of the object.

Discussion of the method

The method proposed is elementary, but exact. Those skilled in the art to which the invention relates will need no further detailed description of the inventive step. A point in the object is transformed into a specific point in the Radon space, namely the maximum or minimum of a cosine, which has the spatial coordinates of the original point and which is determined for the image reconstruction.

As an example we consider an object of NxN points, with N even; each point having its proper weight. We choose these points to be located equidistantly on the radials, these in turn are making successively an angle $\pi/N$ with each order. The points are therefore on the crossings of the concentric circles with the radials, Fig. 1. We choose these points to be the sampling points of an object in the Radon transform in normal coordinates. The object can be of arbitrary form, however, by choosing weights zero for sampling points on the grid where there are no points of the object.

The first double scan, one from above, the other from below, samples 2N points with their weights of the largest r absolute value, for all orientations $\theta$ from the cosinogram. These points are reconstructed on the circumference of the circle in image space and the remainders of the corresponding cosines are deleted from the cosinogram. Then starts the double scan for the next largest r, etc. until finish with N/2 double scans. The cosine function occurring in the cosinogram, which is the same for all the concentric circles differing only in the radius, can be pre-calculated for all $\theta$ and $\varphi$, and stored.

Consequently, for the first double scan of 2N points, with the same absolute value of r, and regularly arranged in angle dependence known a priori, by identifying one point, the results for the other N-1 neighbour, next-neighbour, etc. are also known. Also the calculation for the concentric circles is the same for all. Therefore the method is highly efficient. The method is applicable in the same imaging modalities as the standard art, namely X-CT, PET, SPECT, MRI and similar ones, as discussed further on.

Although the above is described in handwriting, it is obvious that processing can be handled by programmed processors. The cosines occurring in the cosinogram can be pre-calculated and stored, templates can be made, programmable and pre-programmed for some values of N, e.g. 128, 256, 1024, built into a highly efficient dedicated apparatus for image reconstruction with the method of invention.

With regard to computational time for 2D NxN data, standard FBP algorithms need $O\{N^3\}$ arithmetic calculations, Fourier transform algorithms need $O\{(N^2)\log N)$, see e.g. [6]. In the present method, use is made of the knowledge, that the points on the radius for each concentric circle are functionally related with known function. So to identify N points on a circle calculations need only to be made for one point. The results for the other N-1 follow from the functional relationship and can be pre-calculated. This brings the computational time a factor N lower with regard to FBP. Moreover, the calculation for the concentric circles, only differing in the radius, is the same for all and can be pre-calculated also. This brings another factor N lower than FBP. The weights of the points are as measured. Therefore the computational time would be of O{N} only, consisting of identifying N concentric circles, with calculation for one point per circle. This should be augmented by the computational time needed for the deletions of the cosines from the cosinogram, which can be pre-calculated. It is to be expected that multiple coincidences will be low, as the joint probability that a cosine will coincide with several grid points is low. Furthermore, use of symmetry reduces the calculations with some factors of 2. The following example serves as an illustration.

To illustrate the above statements, the case for N = 128 is considered. Table 1a - 1d give the results. In these tables r cos$\varphi$ is calculated (i.e. $\theta$ = 0) for r = 1 - j/64, for j = 1,....64, $\varphi$ = i $\Delta$, i = 1, ... 64, $\Delta$ = 180°/128, from which the results can be obtained for i = 65, ... 128, and for r < 0. To reproduce Table 1a - 1d it is only necessary to calculate cos$\varphi$ for i = 1, ... 64 and j = 0, yielding the first column. The next columns are found by multiplying the corresponding r values by the first column. With the help of Table 1a - 1d, transposed, and from symmetry consideration and by shifting the cosines, cos($\varphi$ - $\theta$), $\theta$ = i/$\Delta$, the whole cosinogram of $128^3$, i.e more than 2 million data, can be constructed with only 64 independent calculations.

The maximum of the cosine for a given r and for $\varphi$ = $\theta$, is to be taken as an image point. With regard to the deletion of the remainder of the corresponding cosine from the cosinogram, it follows from Table 1a - 1d, that the nearest neighbours differ no more than 2 digits in the fourth decimal for r < .8281. So the remainder of a cosine is considered to coincide with a sampled point, an r-value, if it differs by 1 digit or less from that r- value. For example: in Table 1a, j = 1, i = 40 coincides with the r-value for j = 29. The nearest neighbours differ no more than 1 digit in the fourth decimal for r < .5000, so in these cases coincidence is considered if the value corresponds to the r-value given in the tables. All such coincidence points are set in bold in the tables. It follows from the results that of the 64 r-values there is no coincidence in 42 cases, 1 coincidence in 16 cases, 2 coincidences in 5 cases and 4 coincidences in 1 case. So for the deletions of the remainders of the cosines from the cosinogram: 30 calculations are needed. Shifting the cosines cos($\varphi$ - $\theta$) from grid to grid does not affect the results. In sum, the number of independent calculations to reconstruct the cosinogram is 64 + 30 = 94, i. e. < 128. The grid mesh effectively filters the cosinogram.

To illustrate the use of Table 1 and Table 2, it follows for the point j = 0, i = 0, the maximum on the x-axis, that no value of its cosine for i = 1, 2, .128 coincides with a lower r-value of the sampling points. For the point r =.9844, j = 1, i = 0, its cosine for i = 40 coincides with a lower r-value (.5469) for j = 29, so the weight of that point should be deleted from that of this lower r-value, as also for r = -.5469.

It is concluded that the arithmetic calculations for image reconstruction with the method of the invention is of order N. Moreover the calculations can be made in advance and stored in the processors.

Accelerated image reconstruction.

From the above discussion and examples it follows that pre-calculating the cosines for the values of N considered allows for an accelerated image reconstruction by only sampling the relevant points of the cosines, separating them in image points, directly used for the image reconstruction, and the remainder points, to be deleted.

Applications.

The method of identifying a unique point in a parameter space for each object point and then reconstructing exactly the image point can be applied in all cases that such a unique point can be found from the projection of the object point in the parameter space, deleting the remainder of its projection from the parameter space.

In prior art, image reconstruction with the PR-FBP algorithm is well-known and widely applied in medical imaging, like X-CT, PET, SPECT and MRI, see e.g. [1, 2, 6] and references therein. The computational load of FBP for the reconstruction of an NxN image is of O{$N^3$}. With the method of the present invention, the computational load is of order N only. To further speed up the imaging process, the calculations can be done in advance and stored on a template to shorten the imaging critical path. In the case of MRI, a fast data acquisition with rotating field gradient is proposed, patent application no. EP 07075385.0/ patent no. EP 1995604, reference [9]. That method can be combined with the present invention for high speed imaging.

The above description for the applicability of the method of invention in projection reconstruction is sufficient for the ordinary skilled in the art of the above mentioned medical imaging modalities, as these are intimately connected with PR-FBP. The application of the method on active and passive synthetic aperture radiometry is less obvious, as the relation of radiometry with PR-FBP is not widely known. Therefore a short review of radiometry, which is not part of the invention, is given below.

Review of synthetic aperture radiometry (not part of the invention).

Synthetic aperture, also named interferometric, radiometry includes active synthetic aperture SAR/ISAR radar [10, 11] and passive microwave radiometry [12] developed from radio astronomy. Interferometric radiometry is actually an active global research area, with leading institutions like NASA - JPL and ESA in space and earth research, civil and defence R&D centres for reconnaissance, forecasting, detection and security, see [13] for an overview of the state of the art.

Applications of FBP to radiometry have been proposed in SAR radar[14] and in passive microwave radiometer [15]. In [14] a local back projection (LBP) algorithm is proposed to reduce the computational load of FBP by a square root of N to $O\{N^{2.5}\}$. In [15] rotating linear synthetic aperture antennas are used to obtain the data from the 2D object scene, for example a surface of the earth, which are processed with FBP. More recently, rotating synthetic aperture linear antennas [16, 17], and Y-shape antennas are proposed for efficient data acquisition. The acquired data is the so called visibility function, a 2D spatial frequency function, which is essentially the 2D Fourier transform of the brightness temperature of the object scene [13,17, 18]. It follows from the Fourier Central Slice Theorem (FCST) that a 1-dimensional Fourier transform of the visibility function along the long linear antenna axis is a Radon slice along that axis. The set of Radon slices of all the rotations between 0 and $\pi$, eq.(2), forms the cosinogram in Radon space, cf. the present invention. This is straightforward for the linear synthetic aperture antenna, which is also considered to be the most practical solution [15 - 17]. With the rotating Y-shape antenna one can use the $\pi/3$ symmetry to regrid the hexagonal grid to the radial grid, but the Y-shape antenna has a central part which has a circular antenna configuration. So the situation is different from the linear antenna. Common is the rotation of the antenna, to have a better coverage of the visibility function with the least of antenna weight [15 - 17], less backup hardware and load, important aspects in air-borne and space missions.

Applicability of the invention for synthetic aperture radiometry.

It follows from the above review, that the method of invention can be applied to synthetic aperture radiometry for the cases that the acquired data can be transformed to the Radon space in the manner described in the above review. Therefore, the computational load for the image reconstruction can be reduced from $O\{N^3\}$ of FBP, to $O\{N\}$ with the present invention. This saves a considerable amount of signal processing equipment for on board processing and data traffic to ground station. Combined with the rotating antenna [15 - 17] this method of invention is most useful, in particular in air-borne and space missions.

References

[1] Alan M. Cormack and Sir Godfrey N. Hounsfield got the Nobel-prize for Medicine in 1979 for their work with Computed Tomography.

[2] P. C. Lauterbur, Nature 242 (1973) 190-191: Image Formation by Induced Local Interactions: Examples Employing Nuclear Magnetic Resonance. Nobel-prize for Medicine 2003.

[3] J. Radon, Über die Bestimmung von Funktionen durch ihre Integralwerte längs gewisser Mannigfaltigkeiten, Ber. Verh. Sächs. Akad. Wiss. Leipzig, Math.-Nat. kl. 69 (1917), 262-277.

[4] P. C. V. Hough, Method and means for recognizing complex patterns. U. S. Patent 3,069,654, December 18, 1962.

[5} R. O. Duda and P. E. Hart, Use of the Hough Transformation to detect lines and curves in pictures. Comm. ACM 15, No.1, pp. 11-15, 1972.

[6] P. Toft, The Radon Transform - Theory and Implementation, Ph.D. thesis Department of Mathematical Modelling, Technical University of Denmark,1996.

[7] A. L. Kesidis and N. Papamarkos, On the Inverse Hough Transform, IEEE Transactions on Pattern Analysis and Machine Intelligence Vol. 21, No. 12 Dec. 1999, 1-15

[8] A. L. Kesidis and N. Papamarkos, A window-based inverse Hough Transform, Pattern Recognition 33 (2000) 1105-1117.

[9] S. Emid, High speed, high resolution, silent, real-time MRI method, Applic.no. EP 07075385.0, Patent no. EP 1995604, Eur. Patent Bull. 2008/48.

[10] Mensa, High resolution radar imaging, 1981, Artech House, Dedham, MA.

[11] H. Achim, Processing of SAR Data: Fundamentals, Signal Processing, Interferometry, Springer 2004, ISBN 3-540-05043-4.

[12] C. S. Ruf, C. T. Swift, A. B. Tanner and D. M. Le Vine, Interferometric synthetic aperture microwave radiometry for the remote sensing of the earth, IEEE Trans. G. R. S. Vol. 26, No. 9,597-611, 1988.

[13] M. Peichl, S. Dill, M. Jirousek and H. Suess, Proceedings of WFMN07 II C1, 75-83, 2007, Chemnitz, Germany.

[14] H. Hellsten, A SAR radar system, WO Patent: WO 97/11387, publ. date 27.03.97.

[15] C. A. Wiley and C. R. Edelsohn, Microwave radiometer using fan beam inversion, WO Patent: WO/ 1985/005188, publication date 21.11.1985.

[16] J. Wu, H. Liu, et al., The rotate mother and son satellite system for passive microwave imaging, China Patent Publication no. CN1782734, 2005.

[17] C. Chang, J. Wu, and W. Sun, Applications of Pseudo-polar FFT in Synthetic Aperture Radiometer Imaging, PIERS Vol. 3, No.1, 2007, 25 - 30.

[18] P. De Maagt, J. B. Christensen, A. Carlstrom, A. J. G. Emrich and J. S. Back Andersen, Interferometric Radiometer, US Patent 20080007451, Publication date January 10 2008.

Table 1a: φ = i Δ, Δ = 180°/128, i = 0, 1, .....64; r = 1 - j/64, j = 0, 1, .....16

| rcosφ | j=0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| i=0 | 1 | .9844 | .9688 | .9531 | .9375 | .9219 | .9063 | .8906 | .8750 | .8594 | .8437 | .8281 | .8125 | .7969 | .7813 | .7656 | .7500 |
| 1 | .9997 | .9841 | .9685 | .9528 | .9372 | .9216 | .9060 | .8903 | .8747 | .8591 | .8434 | .8279 | .8123 | .7967 | .7811 | .7654 | .7498 |
| 2 | .9988 | .9832 | .9676 | .9520 | .9364 | .9208 | .9052 | .8895 | .8740 | .8584 | .8427 | .8271 | .8115 | .7959 | .7804 | .7647 | .7491 |
| 3 | .9973 | .9817 | .9662 | .9505 | .9350 | .9199 | .9039 | .8882 | .8726 | .8571 | .8414 | .8259 | .8103 | .7947 | .7792 | .7635 | .7480 |
| 4 | .9952 | .9797 | .9641 | .9485 | .9330 | .9175 | .9019 | .8863 | .8708 | .8553 | .8397 | .8241 | .8086 | .7931 | .7775 | .7619 | .7464 |
| 5 | .9925 | .9770 | .9615 | .9460 | .9305 | .9150 | .8995 | .8839 | .8684 | .8530 | .8374 | .8219 | .8064 | .7909 | .7754 | .7599 | .7444 |
| 6 | .9892 | .9738 | .9583 | .9428 | .9274 | .9119 | .8965 | .8810 | .8656 | .8501 | .8346 | .8192 | .8037 | .7883 | .7729 | .7573 | .7419 |
| 7 | .9853 | .9699 | .9545 | .9391 | .9237 | .9083 | .8930 | .8775 | .8621 | .8468 | .8313 | .8157 | .8006 | .7852 | .7698 | .7543 | .7390 |
| 8 | .9808 | .9652 | .9502 | .9348 | .9195 | .9042 | .8889 | .8735 | .8585 | .8429 | .8275 | .8122 | **.7969** | .7816 | .7663 | .7509 | .7356 |
| 9 | .9757 | .9605 | 9453 | .9299 | .9147 | .8995 | .8843 | .8690 | .8537 | .8385 | .8232 | .8000 | .7928 | .7775 | .7623 | .7470 | .7318 |
| 10 | .9700 | .9549 | .9397 | .9245 | .9094 | .8942 | .8791 | .8639 | .8488 | .8336 | .8184 | .8033 | .7881 | .7730 | .7579 | .7426 | .7275 |
| 11 | .9638 | .9488 | .9337 | .9186 | .9036 | .8885 | .8735 | .8584 | .8433 | .8283 | **.8125** | .7981 | .7831 | .7681 | .7530 | .7379 | .7229 |
| 12 | .9569 | .9420 | .9270 | .9120 | .8971 | .8822 | .8673 | .8522 | .8373 | .8224 | .8073 | .7924 | .7775 | .7626 | .7476 | .7297 | .7177 |
| 13 | .9495 | .9347 | .9199 | .9050 | .8902 | .8753 | .8602 | .8456 | .8308 | .8160 | .8004 | .7863 | .7715 | .7567 | .7418 | .7269 | .7121 |
| 14 | .9415 | .9268 | .9121 | .8973 | .8827 | .8680 | .8533 | .8385 | .8238 | .8087 | .7943 | .7797 | .7650 | .7503 | .7356 | .7208 | .7061 |
| 15 | .9330 | 9184 | .9039 | .8892 | .8747 | .8601 | .8456 | .8309 | .8164 | .8018 | .7872 | .7726 | .7581 | .7435 | .7290 | .7143 | .6998 |
| 16 | .9239 | 9095 | .8951 | .8806 | .8662 | .8517 | .8373 | .8228 | .8084 | .7940 | .7795 | .7651 | .7507 | .7363 | .7218 | .7073 | .6929 |
| 17 | .9142 | .8999 | .8857 | .8713 | .8571 | .8428 | .8285 | .8142 | .7999 | .7857 | .7713 | .7570 | .7428 | .7285 | .7143 | .6999 | .6857 |
| 18 | .9040 | .8899 | .8758 | .8616 | .8475 | .8334 | .8193 | .8051 | .7910 | .7769 | .7627 | .7486 | **.7345** | .7204 | .7063 | .6921 | .6780 |
| 19 | .8932 | .8793 | .8653 | .8513 | .8374 | .8234 | .8095 | .7955 | .7816 | .7676 | .7535 | .7397 | .7257 | .7118 | .6979 | .6838 | .6699 |
| 20 | .8819 | .8681 | .8544 | .8405 | .8268 | .8130 | .7993 | .7854 | .7717 | .7579 | .7441 | .7303 | .7165 | .7028 | .6890 | .6752 | .6614 |
| 21 | .8701 | .8565 | .8430 | .8293 | .8157 | .8021 | .7886 | .7749 | .7613 | .7478 | .7341 | .7205 | .7070 | .6934 | .6798 | .6661 | .6526 |
| 22 | .8577 | .8443 | .8309 | .8175 | .8041 | .7907 | .7773 | .7639 | .7505 | .7371 | .7236 | .7103 | .6969 | .6835 | .6701 | .6567 | .6433 |

(continued)

| rcosφ | j=0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| 23 | .8449 | .8317 | .8185 | .8053 | .7921 | .7789 | .7657 | .7525 | .7393 | .7261 | .7128 | .6997 | .6865 | .6733 | .6601 | .6469 | .6337 |
| 24 | .8315 | .8185 | .8056 | .7925 | .7795 | .7666 | .7536 | .7405 | .7276 | .7146 | .7015 | .6886 | .6756 | .6626 | .6497 | .6366 | .6236 |
| 25 | .8176 | .8048 | .7921 | .7793 | .7665 | .7537 | .7410 | .7282 | .7154 | .7026 | .6898 | .6771 | .6643 | .6515 | .6388 | .6260 | .6132 |
| 26 | .8032 | .7907 | .7781 | **.7655** | .7530 | .7405 | .7279 | .7153 | .7028 | .6903 | .6777 | .6651 | .6526 | .6401 | .6275 | .6149 | .6024 |
| 27 | .7883 | .7760 | .7637 | .7513 | .7390 | .7267 | .7144 | .7021 | .6898 | .6775 | .6651 | .6528 | **.6405** | .6282 | .6159 | .6035 | .5912 |
| 28 | .7730 | .7609 | .7489 | .7367 | .7247 | .7126 | .7006 | .6884 | .6764 | .6643 | .6522 | .6401 | .6281 | .6160 | .6039 | .5918 | .5798 |
| 29 | .7572 | .7454 | .7336 | .7217 | .7099 | .6981 | .6863 | .6744 | .6626 | .6507 | .6388 | .6270 | .6152 | .6034 | .5916 | .5797 | .5679 |
| 30 | .7410 | .7294 | .7179 | .7062 | .6947 | .6831 | .6716 | .6599 | .6487 | .6368 | .6252 | .6136 | .6021 | .5905 | .5789 | .5673 | .5558 |
| 31 | .7242 | .7129 | .7016 | .6902 | .6789 | .6676 | **.6563** | .6450 | .6337 | .6224 | .6110 | .5997 | .5884 | .5771 | .5658 | .5544 | .5432 |
| 32 | .7071 | .6961 | .6850 | .6739 | .6629 | .6519 | .6408 | .6297 | .6187 | .6077 | .5966 | .5855 | .5745 | .5635 | .5525 | .5414 | .5303 |
| 33 | .6895 | .6787 | .6680 | .6572 | .6464 | .6357 | **.6249** | .6141 | .6033 | .5926 | .5817 | .5710 | .5602 | .5495 | .5387 | .5279 | .5171 |
| 34 | .6716 | .6611 | .6506 | .6401 | .6296 | .6191 | .6087 | .5981 | .5877 | .5772 | .5666 | .5562 | .5457 | .5352 | .5247 | .5142 | .5037 |
| 35 | .6532 | .6430 | .6328 | .6226 | .6124 | .6022 | .5920 | .5817 | .5716 | .5614 | .5511 | .5409 | .5307 | .5205 | .5103 | **.5001** | .4899 |
| 36 | .6344 | .6245 | .6146 | .6046 | .5948 | .5849 | .5750 | .5650 | .5551 | .5452 | .5352 | .5253 | **.5155** | .5056 | .4957 | .4855 | .4758 |
| 37 | .6152 | .6056 | .5960 | .5863 | .5768 | .5672 | .5576 | .5479 | .5383 | .5287 | .5190 | .5094 | .4999 | .4903 | .4807 | .4710 | .4614 |
| 38 | .5957 | .5864 | .5771 | .5678 | .5585 | .5492 | .5399 | .5305 | .5212 | .5119 | .5026 | .4933 | .4840 | .4747 | .4654 | .4561 | .4468 |
| 39 | .5758 | .5668 | .5574 | .5488 | .5398 | .5308 | .5218 | .5128 | .5038 | .4948 | .4858 | .4768 | .4678 | .4589 | .4499 | .4408 | .4319 |
| 40 | .5556 | **.5469** | .5383 | .5295 | .5209 | .5122 | .5035 | .4948 | .4861 | .4775 | **.4688** | .4601 | .4514 | .4428 | .4341 | .4254 | .4167 |
| 41 | .5350 | .5267 | .5183 | .5099 | .5016 | .4932 | .4849 | .4765 | .4681 | .4598 | .4514 | .4430 | .4347 | .4263 | .4180 | .4096 | .4013 |
| 42 | .5141 | .5061 | .4981 | .4900 | .4820 | .4739 | .4659 | .4579 | .4498 | .4392 | .4337 | .4257 | .4177 | .4097 | .4017 | .3936 | .3856 |
| 43 | .4929 | .4852 | .4775 | .4698 | .4621 | .4544 | .4467 | .4390 | .4313 | .4236 | .4159 | .4082 | .4005 | .3928 | .3851 | .3774 | .3697 |

(continued)

| rcosφ | j=0 | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|---|
| 44 | .4714 | .4640 | .4567 | .4493 | .4419 | .4346 | .4272 | .4198 | .4125 | .4051 | .3977 | .3904 | .3830 | .3757 | .3730 | .3609 | .3536 |
| 45 | .4496 | .4426 | .4356 | .4285 | .4215 | .4145 | .4075 | .4004 | .3934 | .3864 | .3793 | .3723 | .3653 | .3583 | .3513 | .3442 | .3372 |
| 46 | .4276 | .4209 | .4143 | .4075 | .4009 | .3942 | .3875 | .3808 | .3742 | .3675 | .3608 | .3541 | .3473 | .3408 | .3341 | .3274 | .3207 |
| 47 | .4052 | .3989 | .3926 | .3862 | .3799 | .3736 | .3672 | .3609 | .3546 | .3482 | .3419 | .3327 | .3292 | .3229 | .3166 | .3102 | .3039 |
| 48 | .3827 | .3767 | .3708 | .3648 | .3588 | .3528 | .3468 | .3408 | .3349 | .3289 | .3229 | .3169 | .3109 | .3050 | .2989 | .2930 | .2870 |
| 49 | .3599 | .3543 | .3487 | .3430 | .3374 | .3318 | .3262 | .3205 | .3149 | .3093 | .3036 | .2980 | .2924 | .2868 | .2812 | .2755 | .2699 |
| 50 | .3369 | .3316 | .3264 | .3211 | .3158 | .3106 | .3052 | .2998 | .2946 | .2894 | .2840 | .2788 | .2735 | .2683 | .2631 | .2577 | .2525 |
| 51 | .3137 | .3088 | .3039 | .2990 | .2941 | .2892 | .2842 | .2795 | .2743 | .2695 | .2644 | .2596 | .2547 | .2498 | .2451 | .2402 | .2353 |
| 52 | .2903 | .2858 | .2812 | .2769 | .2722 | .2676 | .2630 | .2587 | .2538 | .2494 | .2447 | .2402 | .2357 | .2312 | .2268 | .2223 | .2177 |
| 53 | .2667 | .2625 | .2580 | .2544 | .2501 | .2459 | .2416 | .2377 | .2332 | .2291 | .2248 | .2207 | .2165 | .2124 | .2084 | .2042 | .2000 |
| 54 | .2430 | .2392 | .2350 | .2318 | .2279 | .2240 | .2201 | .2166 | .2125 | .2087 | .2048 | .2011 | .1973 | .1935 | .1899 | .1861 | .1823 |
| 55 | .2191 | .2157 | .2119 | .2090 | .2055 | .2020 | .1984 | .1953 | .1916 | .1882 | .1847 | .1813 | .1779 | .1745 | .1712 | .1678 | .1643 |
| 56 | .1951 | .1921 | .1887 | .1861 | .1830 | .1799 | .1767 | .1739 | .1706 | .1676 | .1645 | .1614 | .1584 | .1554 | .1524 | .1494 | .1463 |
| 57 | .1710 | .1683 | .1654 | .1631 | .1604 | .1576 | .1549 | .1524 | .1495 | .1469 | .1442 | .1415 | .1388 | .1362 | .1336 | .1309 | .1283 |
| 58 | .1467 | .1444 | .1419 | .1399 | .1376 | .1353 | .1329 | .1307 | .1283 | .1260 | .1237 | .1214 | .1191 | .1168 | .1146 | .1123 | .1100 |
| 59 | .1224 | .1205 | .1184 | .1167 | .1148 | .1128 | .1109 | .1091 | .1070 | .1051 | .1032 | .1013 | .0994 | .0975 | .0956 | .0937 | .0918 |
| 60 | .0980 | .0965 | .0948 | .0934 | .0919 | .0903 | .0888 | .0873 | .0857 | .0841 | .0827 | .0811 | .0796 | .0780 | .0765 | .0750 | .0735 |
| 61 | .0736 | .0725 | .0712 | .0701 | .0690 | .0678 | .0667 | .0656 | .0644 | .0632 | .0621 | .0609 | .0598 | .0586 | .0575 | .0563 | .0552 |
| 62 | .0491 | .0483 | .0475 | .0468 | .0460 | .0452 | .0445 | .0438 | .0430 | .0422 | .0414 | .0406 | .0399 | .0391 | .0384 | .0376 | .0368 |
| 63 | .0245 | .0241 | .0238 | .0234 | .0230 | .0226 | .0223 | .0219 | .0215 | .0211 | .0207 | .0203 | .0200 | .0196 | .0192 | .0188 | .0184 |
| 64 | .0 | | | | | | | | | | | | | | | | |

55    50    45    40    35    30    25    20    15    10    5

Table 1b: φ = i Δ, Δ = 180°/128, i = 0,1, .....64; r = 1 - j/64, j = 0, 17, .....32

| rcosφ | j=0 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|
| i=0 | 1 | .7344 | .7188 | .7031 | .6875 | .6719 | .6562 | .6406 | .6250 | .6094 | .5938 | .5781 | .5625 | .5469 | .5312 | .5156 | .5000 |
| 1 | .9997 | .7342 | .7186 | .7029 | .6873 | .6717 | .6560 | .6404 | .6248 | .6092 | .5936 | .5779 | .5623 | .5467 | .5310 | .5154 | .4999 |
| 2 | .9988 | .7335 | .7179 | .7023 | .6867 | .6711 | .6554 | .6398 | .6243 | .6087 | .5931 | .5774 | .5618 | .5462 | .5306 | .5150 | .4994 |
| 3 | .9973 | .7324 | .7169 | .7012 | .6856 | .6701 | .6544 | .6389 | .6233 | .6078 | .5922 | .5765 | .5610 | .5454 | .5298 | .5142 | .4987 |
| 4 | .9952 | .7309 | .7153 | .6997 | .6842 | .6687 | .6531 | .6375 | .6220 | .6065 | .5909 | .5753 | .5598 | .5443 | .5287 | .5131 | .4976 |
| 5 | .9925 | .7289 | .7134 | .6978 | .6823 | .6669 | .6513 | .6357 | .6203 | .6048 | .5893 | .5738 | .5583 | .5428 | .5272 | .5117 | .4963 |
| 6 | .9892 | .7265 | .7110 | .6955 | .6801 | .6646 | .6491 | .6337 | .6183 | .6028 | .5874 | .5719 | .5564 | .5410 | .5255 | .5100 | .4946 |
| 7 | .9853 | .7236 | .7082 | .6928 | .6774 | .6620 | .6466 | .6312 | .6158 | .6004 | .5851 | .5696 | .5542 | .5389 | .5234 | .5080 | .4927 |
| 8 | .9808 | .7203 | .7050 | .6896 | .6743 | .6590 | .6436 | .6283 | .6130 | .5977 | .5824 | .5670 | .5517 | .5364 | .5210 | .5057 | .4904 |
| 9 | .9757 | .7166 | .7013 | .6860 | .6708 | .6556 | .6403 | **.6250** | .6098 | .5946 | .5793 | .5641 | .5488 | .5336 | .5183 | .5031 | .4879 |
| 10 | .9700 | .7137 | .6972 | .6820 | .6669 | .6517 | .6365 | .6214 | .6063 | .5911 | .5760 | .5608 | .5456 | .5305 | .5153 | **.5001** | .4850 |
| 11 | .9638 | .7078 | .6928 | .6776 | .6626 | .6476 | .6322 | .6173 | .6024 | .5873 | .5723 | .5571 | .5421 | .5271 | .5109 | .4969 | .4819 |
| 12 | .9569 | .7027 | .6878 | .6728 | .6579 | .6429 | .6279 | .6129 | .5981 | .5831 | .5682 | .5532 | .5383 | .5233 | .5083 | .4934 | .4785 |
| 13 | .9495 | .6973 | .6825 | .6676 | .6528 | .6380 | .6231 | .6082 | .5934 | .5735 | .5638 | .5489 | .5341 | .5193 | .5044 | .4896 | .4748 |
| 14 | .9415 | .6914 | .6768 | .6620 | .6473 | .6326 | .6178 | .6031 | .5884 | .5738 | .5591 | .5443 | .5296 | .5149 | **.5001** | .4854 | .4708 |
| 15 | .9330 | .6852 | .6706 | .6560 | .6414 | .6269 | .6122 | .5977 | .5831 | .5686 | .5540 | .5394 | .5248 | .5103 | .4956 | .4811 | .4665 |
| 16 | .9239 | .6785 | .6641 | .6496 | .6352 | .6208 | .6063 | .5919 | .5774 | .5630 | .5486 | .5341 | .5197 | .5053 | .4908 | .4764 | .4620 |
| 17 | .9142 | .6714 | .6571 | .6428 | .6285 | .6143 | .5999 | .5856 | .5714 | .5571 | .5429 | .5285 | .5142 | **.5000** | .4856 | .4714 | .4571 |
| 18 | .9040 | .6639 | .6498 | .6356 | .6215 | .6074 | .5932 | .5791 | .5650 | .5509 | .5368 | .5226 | .5085 | .4944 | .4802 | .4661 | .4520 |
| 19 | .8932 | .6560 | .6420 | .6280 | .6141 | .6001 | .5861 | .5722 | .5583 | .5443 | .5304 | .5164 | .5024 | .4885 | .4745 | .4605 | .4466 |
| 20 | .8819 | .6477 | .6339 | .6201 | .6063 | .5925 | .5787 | .5649 | .5512 | .5374 | .5237 | .5098 | .4961 | .4823 | .4685 | .4547 | .4410 |
| 21 | .8701 | .6390 | .6254 | .6118 | .5982 | .5846 | .5710 | .5574 | .5438 | .5302 | .5167 | .5030 | .4894 | .4759 | .4622 | .4486 | .4351 |
| 22 | .8577 | .6299 | .6165 | .6030 | .5897 | .5763 | .5628 | .5494 | .5361 | .5227 | .5093 | .4758 | .4825 | .4691 | .4556 | .4422 | .4289 |

(continued)

| rcosφ | j=0 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|
| 23 | .8449 | .6205 | .6073 | .5940 | .5809 | .5677 | .5544 | .5412 | .5281 | .5149 | .5017 | .4884 | .4753 | .4621 | .4488 | .4356 | .4225 |
| 24 | .8315 | .6107 | .5977 | .5846 | .5717 | .5587 | .5456 | .5327 | .5197 | .5067 | .4937 | .4807 | .4677 | .4547 | .4417 | .4287 | .4158 |
| 25 | .8176 | .6004 | .5877 | .5749 | .5621 | .5493 | .5365 | .5238 | .5110 | .4982 | .4855 | .4727 | .4600 | .4471 | .4343 | .4216 | .4088 |
| 26 | .8032 | .5899 | .5773 | .5647 | .5522 | .5397 | .5271 | .5145 | .5020 | .4895 | .4769 | .4643 | .4518 | .4393 | .4267 | .4141 | .4016 |
| 27 | .7883 | .5789 | .5666 | .5542 | .5420 | .5297 | .5173 | .5050 | .4927 | .4804 | .4681 | .4557 | .4434 | .4311 | .4187 | .4064 | .3942 |
| 28 | .7730 | .5677 | .5556 | .5435 | .5314 | .5194 | .5072 | .4952 | .4831 | .4711 | .4590 | .4469 | .4348 | .4228 | .4106 | .3986 | .3865 |
| 29 | .7572 | .5561 | .5443 | .5324 | .5206 | .5088 | .4969 | .4851 | .4733 | .4614 | .4496 | .4345 | .4259 | .4141 | .4022 | .3904 | .3786 |
| 30 | .7410 | .5442 | .5326 | .5210 | .5094 | .4979 | .4862 | .4747 | .4631 | .4516 | .4400 | .4284 | .4168 | .4053 | .3936 | .3821 | .3705 |
| 31 | .7242 | .5319 | .5206 | .5092 | .4979 | .4866 | .4752 | .4639 | .4526 | .4413 | .4300 | .4187 | .4074 | .3961 | .3847 | .3734 | .3621 |
| 32 | .7071 | .5193 | .5083 | .4972 | .4861 | .4751 | .4640 | .4530 | .4419 | .4309 | .4199 | .4088 | .3977 | .3867 | .3756 | .3646 | .3536 |
| 33 | .6895 | .5064 | .4956 | .4848 | .4740 | .4633 | .4524 | .4417 | .4309 | .4202 | .4094 | .3986 | .3878 | .3771 | .3663 | .3555 | .3448 |
| 34 | .6716 | .4932 | .4827 | .4722 | .4617 | .4512 | .4407 | .4302 | .4198 | .4093 | .3988 | .3883 | .3778 | .3673 | .3568 | .3463 | .3358 |
| 35 | .6532 | .4797 | .4695 | .4593 | .4491 | .4389 | .4286 | .4184 | .4083 | .3981 | .3879 | .3776 | .3674 | .3572 | .3475 | .3368 | .3266 |
| 36 | .6344 | .4659 | .4560 | .4460 | .4362 | .4263 | .4163 | .4064 | .3965 | .3866 | .3767 | .3667 | .3566 | .3470 | .3370 | .3271 | .3172 |
| 37 | .6152 | .4518 | .4422 | .4325 | .4230 | .4133 | .4037 | .3940 | .3845 | .3749 | .3653 | .3556 | .3461 | .3365 | .3268 | .3172 | .3076 |
| 38 | .5957 | **.4375** | .4282 | .4188 | .4095 | .4003 | .3909 | .3816 | .3723 | .3630 | .3537 | .3444 | .3351 | .3258 | .3164 | .3071 | .2979 |
| 39 | .5758 | .4229 | .4139 | .4048 | .3959 | .3869 | .3778 | .3689 | .3599 | .3509 | .3419 | .3329 | .3239 | .3149 | .3059 | **.2969** | .2879 |
| 40 | .5556 | .4080 | .3994 | **.3906** | .3820 | .3733 | .3646 | .3559 | .3473 | .3386 | .3299 | .3212 | **.3125** | .3039 | .2951 | .2865 | .2778 |
| 41 | .5350 | .3929 | .3846 | .3762 | .3678 | .3595 | .3511 | .3472 | .3344 | .3260 | .3177 | .3093 | .3009 | .2926 | .2842 | .2758 | .2675 |
| 42 | .5141 | .3776 | .3695 | .3615 | .3534 | .3454 | .3374 | .3293 | .3213 | .3133 | .3053 | .2972 | .2892 | .2812 | .2731 | .2651 | .2571 |
| 43 | .4929 | .3620 | .3543 | .3466 | .3389 | .3312 | .3234 | .3158 | .3081 | .3004 | .2927 | .2927 | .2849 | .2696 | .2618 | .2541 | .2465 |

(continued)

| rcosφ | j=0 | 17 | 18 | 19 | 20 | 21 | 22 | 23 | 24 | 25 | 26 | 27 | 28 | 29 | 30 | 31 | 32 |
|---|---|---|---|---|---|---|---|---|---|---|---|---|---|---|---|---|---|
| 44 | .4714 | .3462 | .3388 | .3314 | .3241 | .3167 | .3093 | .3020 | .2946 | .2873 | .2799 | .2725 | .2652 | .2578 | 2504 | .2431 | .2357 |
| 45 | .4496 | .3302 | .3232 | .3161 | .3091 | .3021 | .2950 | .2880 | .2810 | .2740 | .2670 | .2599 | .2529 | .2459 | .2388 | .2318 | .2248 |
| 46 | .4276 | .3140 | .3074 | .3006 | .2940 | .2873 | .2788 | .2739 | .2673 | .2606 | .2539 | .2472 | .2405 | .2339 | .2271 | .2205 | .2138 |
| 47 | .4052 | .2976 | .2913 | .2849 | .2786 | .2723 | .2659 | .2596 | .2533 | .2469 | .2406 | .2342 | .2279 | .2216 | .2152 | .2089 | .2026 |
| 48 | .3827 | .2811 | .2751 | .2691 | .2631 | .2571 | .2495 | .2452 | .2392 | .2332 | .2274 | .2212 | .2152 | .2093 | .2032 | .1970 | .1914 |
| 49 | .3599 | .2643 | .2587 | .2530 | .2474 | .2418 | .2362 | .2306 | .2249 | .2193 | .2137 | .2081 | .2024 | .1968 | .1912 | .1856 | .1800 |
| 50 | .3369 | .2474 | .2422 | .2369 | .2316 | .2264 | .2211 | .2158 | .2106 | .2053 | .2001 | .1948 | .1895 | .1843 | .1790 | .1737 | .1685 |
| 51 | .3137 | .2304 | .2255 | .2206 | .2157 | .2108 | .2058 | .2010 | .1961 | .1912 | .1863 | .1813 | .1765 | .1716 | .1666 | .1617 | .1569 |
| 52 | .2903 | .2132 | .2087 | .2041 | .1996 | .1951 | .1905 | .1860 | .1814 | .1769 | .1724 | .1678 | .1633 | .1588 | .1542 | .1497 | .1452 |
| 53 | .2667 | .1959 | .1917 | **.1875** | .1834 | .1792 | .1750 | .1708 | .1667 | .1625 | .1584 | .1542 | .1500 | .1459 | .1417 | .1375 | .1334 |
| 54 | .2430 | .1785 | .1747 | .1709 | .1671 | .1633 | .1595 | .1557 | .1519 | .1468 | .1443 | .1405 | .1367 | .1329 | .1291 | .1253 | .1215 |
| 55 | .2191 | .1609 | .1575 | .1540 | .1506 | .1472 | .1438 | .1404 | .1369 | .1335 | .1301 | .1267 | .1232 | .1198 | .1164 | .1130 | .1096 |
| 56 | .1951 | .1433 | .1402 | .1372 | .1341 | .1311 | .1280 | **.1250** | .1219 | .1189 | .1159 | .1128 | .1097 | .1067 | .1036 | .1006 | .0976 |
| 57 | .1710 | .1256 | .1229 | .1202 | .1176 | .1149 | .1122 | .1095 | .1069 | .1042 | .1015 | .0989 | .0962 | .0935 | .0908 | .0882 | .0855 |
| 58 | .1467 | .1077 | .1054 | .1031 | .1009 | .0986 | .0963 | .0940 | .0917 | .0894 | .0871 | .0848 | .0825 | .0802 | .0779 | .0756 | .0734 |
| 59 | .1224 | .0899 | .0880 | .0861 | .0842 | .0822 | .0803 | .0784 | .0765 | .0746 | .0727 | .0708 | .0689 | .0669 | .0650 | .0631 | .0612 |
| 60 | .0980 | .0720 | .0704 | .0689 | .0674 | .0658 | .0643 | .0628 | .0613 | .0597 | .0582 | .0567 | .0551 | .0536 | .0521 | .0505 | .0490 |
| 61 | .0736 | .0541 | .0529 | .0517 | .0506 | .0495 | .0483 | .0471 | .0460 | .0448 | .0437 | .0425 | .0414 | .0403 | .0391 | .0379 | .0368 |
| 62 | .0491 | .0361 | .0353 | .0345 | .0338 | .0330 | .0322 | .0315 | .0307 | .0299 | .0292 | .0284 | .0276 | .0269 | .0261 | .0253 | .0246 |
| 63 | .0245 | .0180 | .0176 | .0172 | .0168 | .0164 | .0161 | .0157 | .0153 | .0149 | .0145 | .0142 | .0138 | .0134 | .0130 | .0126 | .0123 |
| 64 | .0 | | | | | | | | | | | | | | | | |

EP 2 306 402 A1

Table 1c: φ = i Δ, Δ = 180°/128, i = 0, 1, .......64; r = 1 - j/64, j = 0, 33, .....48

| rcosφ | j=0 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|
| i=0 | 1 | .4844 | .4688 | .4531 | .4375 | .4219 | .4063 | .3906 | 3750 | 3594 | .3438 | .3281 | .3125 | .2969 | .2813 | .2656 | .2500 |
| 1 | .9997 | .4843 | .4687 | .4530 | .4374 | .4218 | .4062 | .3905 | .3749 | .3593 | .3437 | .3280 | .3124 | .2968 | .2812 | .2655 | .2499 |
| 2 | .9988 | .4838 | .4682 | .4526 | .4370 | .4214 | .4058 | .3901 | .3746 | .3590 | .3434 | .3277 | .3121 | .2964 | .2810 | .2653 | .2497 |
| 3 | .9973 | .4831 | .4675 | .4519 | .4363 | .4208 | .4052 | .3895 | .3740 | .3584 | .3429 | .3272 | .3117 | .2961 | .2805 | .2649 | .2493 |
| 4 | .9952 | .4821 | .4665 | .4509 | .4354 | .4199 | .4043 | .3887 | .3732 | .3577 | .3421 | .3265 | .3110 | .2955 | .2799 | .2643 | .2488 |
| 5 | .9925 | .4808 | .4653 | .4497 | .4342 | .4187 | .4033 | .3877 | .3722 | .3567 | .3412 | .3256 | .3102 | .2947 | .2792 | .2636 | .2481 |
| 6 | .9892 | .4792 | .4637 | .4482 | .4328 | .4173 | .4019 | .3864 | .3710 | .3555 | .3407 | .3246 | .3091 | .2937 | .2783 | .2627 | .2473 |
| 7 | .9853 | .4773 | .4619 | .4464 | .4311 | .4157 | .4003 | .3849 | .3695 | .3541 | .3388 | .3233 | .3079 | .2925 | .2772 | .2617 | .2463 |
| 8 | .9808 | .4747 | .4598 | .4444 | .4291 | .4138 | .3985 | .3831 | .3678 | .3525 | .3372 | .3218 | .3065 | .2912 | .2759 | .2605 | .2452 |
| 9 | .9757 | .4726 | .4574 | .4421 | .4269 | .4116 | .3964 | .3811 | .3659 | 3507 | .3354 | .3201 | .3049 | .2897 | .2745 | .2591 | .2439 |
| 10 | .9700 | .4699 | .4547 | .4395 | .4239 | .4092 | .3941 | .3789 | .3638 | .3486 | .3335 | .3183 | .3031 | .2880 | .2729 | .2576 | .2425 |
| 11 | .9638 | .4669 | .4518 | .4367 | .4217 | .4066 | .3916 | .3765 | .3614 | .3464 | .3314 | .3162 | .3012 | .2862 | .2711 | .2560 | .2410 |
| 12 | .9569 | .4635 | .4486 | .4335 | .4186 | .4037 | .3888 | .3738 | .3588 | .3439 | .3290 | .3140 | .2990 | .2841 | .2692 | .2542 | .2392 |
| 13 | .9495 | .4599 | .4451 | .4302 | .4154 | .4006 | .3858 | .3709 | .3561 | .3413 | .3264 | .3115 | .2967 | .2819 | .2677 | .2522 | .2374 |
| 14 | .9415 | .4561 | .4414 | .4266 | .4119 | .3972 | .3825 | 3677 | .3531 | .3384 | .3237 | .3089 | .2942 | .2795 | .2648 | .2501 | .2354 |
| 15 | .9330 | .4505 | .4374 | .4199 | .4082 | .3936 | .3791 | .3644 | .3499 | .3353 | .3207 | .3061 | .2916 | .2770 | .2625 | .2478 | .2333 |
| 16 | .9239 | .4475 | .4331 | .4186 | .4042 | .3898 | .3754 | .3659 | .3465 | .3320 | .3176 | .3031 | .2887 | .2743 | .2691 | .2454 | .2310 |
| 17 | .9142 | .4428 | .4286 | .4142 | .4000 | .3857 | .3714 | .3571 | .3428 | .3286 | .3143 | .2999 | .2857 | .2714 | .2572 | .2428 | .2286 |
| 18 | .9040 | .4379 | .4238 | .4096 | .3955 | .3814 | .3673 | .3531 | .3390 | .3245 | .3108 | .2966 | .2825 | .2684 | .2543 | .2401 | .2260 |
| 19 | .8932 | .4327 | .4187 | .4047 | .3908 | .3768 | .3629 | .3489 | .3350 | .3210 | .3071 | .2931 | .2791 | .2652 | .2513 | .2372 | .2233 |
| 20 | .8819 | .4272 | .4134 | .3996 | .3858 | .3721 | .3583 | .3445 | .3307 | .3170 | .3032 | .2894 | .2756 | .2618 | .2481 | .2342 | .2205 |
| 21 | .8701 | .4215 | .4079 | .3942 | .3807 | .3671 | .3535 | .3399 | .3263 | .3127 | .2991 | .2855 | .2719 | .2583 | .2448 | .2285 | .2175 |
| 22 | .8577 | .4155 | .4021 | .3886 | .3752 | .3619 | .3485 | .3350 | .3216 | .3083 | .2949 | .2814 | .2680 | .2547 | .2413 | .2278 | .2144 |

(continued)

| rcosφ | j=0 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|
| 23 | .8449 | .4093 | .3961 | .3828 | .3696 | .3565 | .3433 | .3300 | .3168 | .3037 | .2905 | .2772 | .2640 | .2509 | .2377 | .2244 | .2112 |
| 24 | .8315 | .4028 | .3898 | .3768 | .3638 | .3508 | .3378 | .3248 | .3118 | .2988 | .2859 | .2728 | .2598 | .2469 | .2339 | .2207 | .2079 |
| 25 | .8176 | .3960 | .3833 | .3705 | .3577 | .3449 | .3322 | .3194 | .3066 | .2938 | .2810 | .2683 | .2555 | .2427 | .2300 | .2172 | .2044 |
| 26 | .8032 | .3891 | .3765 | .3639 | .3514 | .3389 | .3263 | .3137 | .3012 | .2887 | .2761 | .2635 | .2510 | .2385 | .2259 | .2133 | .2008 |
| 27 | .7883 | .3818 | .3696 | .3572 | .3449 | .3326 | .3203 | .3079 | .2956 | .2833 | .2710 | .2586 | .2463 | .2340 | .2217 | .2094 | .1971 |
| 28 | .7730 | .3744 | .3624 | .3502 | .3382 | .3261 | .3141 | .3019 | .2899 | .2778 | .2658 | .2536 | .2416 | .2295 | .2174 | .2053 | .1933 |
| 29 | .7572 | .3668 | .3550 | .3431 | .3313 | .3195 | .3077 | .2958 | .2840 | .2721 | .2603 | .2484 | .2366 | .2248 | .2130 | .2011 | .1893 |
| 30 | .7410 | .3589 | .3474 | .3357 | .3242 | .3126 | .3011 | .2894 | .2779 | .2663 | .2548 | .2431 | .2379 | .2200 | .2089 | .1968 | .1853 |
| 31 | .7242 | .3508 | .3395 | **.3281** | .3168 | .3055 | .2942 | .2829 | .2716 | .2603 | .2490 | .2376 | .2263 | .2150 | .2037 | .1923 | .1811 |
| 32 | .7071 | .3425 | .3315 | .3204 | .3094 | .2983 | .2877 | .2762 | .2652 | .2541 | .2431 | .2320 | .2210 | .2099 | .1989 | .1878 | .1768 |
| 33 | .6895 | .3340 | .3232 | .3124 | .3017 | .2909 | .2801 | .2693 | .2586 | .2478 | .2371 | .2262 | .2155 | .2047 | .1940 | .1831 | .1724 |
| 34 | .6716 | .3253 | .3148 | .3043 | .2938 | .2833 | .2758 | .2623 | .2519 | .2414 | .2309 | .2204 | .2099 | .1994 | .1889 | .1784 | .1679 |
| 35 | .6532 | .3164 | .3062 | .2960 | .2858 | .2756 | .2654 | .2551 | .2450 | .2348 | .2246 | .2143 | .2041 | .1939 | .1837 | .1735 | .1633 |
| 36 | .6344 | .3073 | .2974 | .2874 | .2776 | .2677 | .2578 | .2478 | .2379 | .2280 | .2181 | .2081 | .1983 | .1884 | .1785 | .1685 | .1586 |
| 37 | .6152 | .2980 | .2884 | .2787 | .2692 | .2596 | **.2500** | .2403 | .2307 | .2211 | .2115 | .2018 | .1923 | .1827 | .1731 | .1634 | .1538 |
| 38 | .5957 | .2886 | .2793 | .2699 | .2606 | .2513 | .2420 | .2327 | .2234 | .2141 | .2048 | .1954 | .1862 | .1769 | .1676 | .1582 | .1489 |
| 39 | .5758 | .2789 | .2699 | .2609 | .2519 | .2429 | .2339 | .2285 | .2159 | .2067 | .1980 | .1889 | .1799 | .1710 | .1620 | .1474 | .1440 |
| 40 | .5556 | .2691 | .2605 | .2517 | .2431 | .2344 | .2257 | .2170 | .2084 | .1997 | .1910 | .1823 | .1736 | .1650 | **.1563** | .1476 | .1389 |
| 41 | .5350 | .2592 | .2508 | .2414 | .2341 | .2257 | .2174 | .2090 | .2006 | .1923 | .1839 | .1755 | .1672 | .1588 | .1505 | .1420 | .1338 |
| 42 | .5141 | .2490 | .2410 | .2329 | .2249 | .2169 | .2089 | .2008 | .1928 | .1848 | .1767 | .1687 | .1607 | .1526 | .1446 | .1365 | .1285 |
| 43 | .4929 | .2388 | .2311 | .2233 | .2156 | .2080 | .2003 | .1925 | .1848 | .1771 | .1694 | .1617 | .1540 | .1463 | .1387 | .1309 | .1232 |

| rcosφ | j=0 | 33 | 34 | 35 | 36 | 37 | 38 | 39 | 40 | 41 | 42 | 43 | 44 | 45 | 46 | 47 | 48 |
|---|---|---|---|---|---|---|---|---|---|---|---|---|---|---|---|---|---|
| 44 | .4714 | .2283 | .2210 | .2136 | .2062 | .1989 | .1915 | .1841 | .1768 | .1694 | .1621 | .1547 | .1473 | .1400 | .1326 | .1252 | .1179 |
| 45 | .4496 | .2178 | .2108 | .2037 | .1967 | .1897 | .1827 | .1756 | .1686 | .1616 | .1546 | .1475 | .1405 | .1335 | .1265 | .1194 | .1124 |
| 46 | .4276 | .2071 | .2005 | .1930 | .1871 | .1804 | .1737 | .1670 | .1604 | .1537 | .1470 | .1403 | .1336 | .1270 | .1203 | .1136 | .1069 |
| 47 | .4052 | .1963 | .1900 | .1836 | .1773 | .1710 | .1646 | .1583 | .1520 | .1456 | .1393 | .1329 | .1266 | .1203 | .1140 | .1076 | .1013 |
| 48 | .3827 | .1854 | .1794 | .1734 | .1674 | .1615 | .1555 | .1495 | .1435 | .1375 | .1316 | .1256 | .1196 | .1136 | .1077 | .1016 | .0957 |
| 49 | .3599 | .1743 | .1687 | .1631 | .1575 | .1518 | .1462 | **.1406** | .1350 | .1293 | .1237 | .1181 | .1125 | .1069 | .1012 | .0956 | .0900 |
| 50 | .3369 | .1632 | .1579 | .1526 | .1474 | .1421 | .1369 | .1316 | .1263 | .1211 | .1158 | .1105 | .1053 | .1000 | .0948 | .0895 | .0842 |
| 51 | .3137 | .1520 | .1471 | .1421 | .1372 | .1324 | .1275 | .1225 | .1176 | .1127 | .1079 | .1029 | .0980 | .0931 | .0882 | .0833 | .0784 |
| 52 | .2903 | **.1406** | .1361 | .1315 | .1270 | .1225 | .1179 | .1134 | .1089 | .1043 | .0998 | .0952 | .0907 | .0862 | .0817 | .0771 | .0726 |
| 53 | .2667 | .1292 | **.1250** | .1208 | .1167 | .1125 | .1084 | .1042 | .1000 | .0959 | .0917 | .0875 | .0833 | .0792 | .0750 | .0708 | .0667 |
| 54 | .2430 | .1177 | .1139 | .1101 | .1063 | .1025 | .0987 | .0949 | .0911 | .0873 | .0835 | .0797 | .0759 | .0721 | .0683 | .0645 | .0607 |
| 55 | .2191 | .1061 | .1027 | .0993 | .0959 | .0924 | .0890 | .0856 | .0822 | .0787 | .0753 | .0719 | .0685 | .0651 | .0616 | .0582 | .0547 |
| 56 | .1951 | .0945 | .0915 | .0884 | .0854 | .0823 | .0793 | .0762 | .0732 | .0701 | .0671 | .0640 | .0610 | .0579 | .0549 | .0518 | .0488 |
| 57 | .1710 | .0828 | .0802 | .0775 | .0748 | .0721 | .0695 | .0668 | .0641 | .0615 | .0588 | .0561 | .0534 | .0508 | .0481 | .0454 | .0428 |
| 58 | .1467 | .0711 | .0688 | .0665 | .0642 | .0619 | .0596 | .0573 | .0550 | .0527 | .0504 | .0481 | .0458 | .0436 | .0413 | .0390 | .0367 |
| 59 | .1224 | .0593 | .0574 | .0555 | .0536 | .0516 | .0497 | .0478 | .0459 | .0440 | .0421 | .0402 | .0383 | .0363 | .0344 | .0325 | .0306 |
| 60 | .0980 | .0475 | .0459 | .0444 | .0429 | .0413 | .0398 | .0383 | .0368 | .0352 | .0337 | .0322 | .0306 | .0291 | .0276 | .0260 | .0245 |
| 61 | .0736 | .0357 | .0345 | .0333 | .0322 | .0311 | .0299 | .0287 | .0276 | .0265 | .0253 | .0241 | .0230 | .0219 | .0207 | .0195 | .0184 |
| 62 | .0491 | .0238 | .0230 | .0222 | .0215 | .0207 | .0199 | .0192 | .0184 | .0176 | .0169 | .0161 | .0153 | .0146 | .0138 | .0130 | .0123 |
| 63 | .0245 | .0119 | .0115 | .0111 | .0108 | .0104 | .0100 | .0096 | .0092 | .0088 | .0085 | .0081 | .0077 | .0073 | .0069 | .0065 | .0062 |
| 64 | .0 | | | | | | | | | | | | | | | | |

Table 1d: $\varphi = i\,\Delta$, $\Delta = 180°/128$, $i = 0, 1, \ldots\ldots 64$; $r = 1 - j/64$, $j = 0, 49, \ldots 64$

| rcosφ | j=0 | 49 | 50 | 51 | 52 | 53 | 54 | 55 | 56 | 57 | 58 | 59 | 60 | 61 | 62 | 63 | 64 |
|---|---|---|---|---|---|---|---|---|---|---|---|---|---|---|---|---|---|
| i=0 | 1 | .2344 | .2188 | .2031 | .1875 | .1719 | .1563 | .1406 | .1250 | .1094 | .0938 | .0781 | .0625 | .0469 | .0313 | .0156 | .0 |
| 1 | .9997 | .2343 | .2187 | .2030 | .1874 | .1718 | .1562 | .1405 | .1249 | .1093 | .0938 | .0781 | .0625 | .0469 | .0313 | .0156 | .0 |
| 2 | .9988 | .2341 | .2185 | .2029 | .1873 | .1717 | .1561 | .1404 | .1249 | .1093 | .0937 | .0780 | .0624 | .0468 | .0312 | .0156 | .0 |
| 3 | .9973 | .2338 | .2182 | .2023 | .1870 | .1714 | .1559 | .1402 | .1247 | .1091 | .0935 | .0779 | .0623 | .0468 | .0312 | .0156 | .0 |
| 4 | .9952 | .2333 | .2177 | .2021 | .1866 | .1711 | .1555 | .1399 | .1244 | .1089 | .0933 | .0777 | .0622 | .0467 | .0311 | .0155 | .0 |
| 5 | .9925 | .2326 | .2172 | .2016 | .1861 | .1706 | .1551 | .1395 | .1241 | .1086 | .0931 | .0775 | .0620 | .0465 | .0311 | .0155 | .0 |
| 6 | .9892 | .2319 | .2164 | .2009 | .1855 | .1700 | .1546 | .1391 | .1237 | .1082 | .0928 | .0773 | .0618 | .0464 | .0310 | .0155 | .0 |
| 7 | .9853 | .2310 | .2156 | .2001 | .1847 | .1694 | .1540 | .1385 | .1232 | .1078 | .0924 | .0770 | .0616 | .0462 | .0308 | .0154 | .0 |
| 8 | .9808 | .2299 | .2146 | .1992 | .1839 | .1686 | .1533 | .1378 | .1226 | .1973 | .0920 | .0765 | .0613 | .0460 | .0307 | .0153 | .0 |
| 9 | .9757 | .2287 | .2135 | .1982 | .1829 | .1677 | .1525 | .1372 | .1220 | .1067 | .0915 | .0762 | .0610 | .0458 | .0305 | .0152 | .0 |
| 10 | .9700 | .2274 | .2122 | .1970 | .1819 | .1667 | .1516 | .1364 | .1213 | .1061 | .0910 | .0757 | .0606 | .0455 | .0304 | .0151 | .0 |
| 11 | .9638 | .2259 | .2109 | .1957 | .1807 | .1657 | .1506 | .1355 | .1205 | .1054 | .0900 | .0752 | .0602 | .0452 | .0302 | .0150 | .0 |
| 12 | .9569 | .2243 | .2094 | .1943 | .1794 | .1645 | .1496 | .1345 | .1196 | .1047 | .0898 | .0747 | .0598 | .0449 | .0300 | .0149 | .0 |
| 13 | .9495 | .2226 | .2078 | .1928 | .1793 | .1632 | .1484 | .1335 | .1187 | .1039 | .0891 | .0742 | .0593 | .0445 | .0297 | .0148 | .0 |
| 14 | .9415 | .2207 | .2060 | .1912 | .1765 | .1618 | .1472 | .1324 | .1177 | .1030 | .0883 | .0735 | .0588 | .0442 | .0294 | .0147 | .0 |
| 15 | .9330 | .2187 | .2041 | .1894 | .1749 | .1604 | .1458 | .1312 | .1166 | .1021 | .0875 | .0729 | .0583 | .0438 | .0292 | .0146 | .0 |
| 16 | .9239 | .2166 | .2021 | .1876 | .1732 | .1588 | .1444 | .1299 | .1155 | .1011 | .0867 | .0722 | .0577 | .0433 | .0289 | .0144 | .0 |
| 17 | .9142 | .2143 | .1993 | .1857 | .1714 | .1572 | .1429 | .1285 | .1143 | .0996 | .0858 | .0714 | .0571 | .0429 | .0286 | .0143 | .0 |
| 18 | .9040 | .2119 | .1978 | .1836 | .1695 | .1554 | .1413 | .1271 | .1130 | .0989 | .0848 | .0706 | .0565 | .0434 | .0283 | .0141 | .0 |
| 19 | .8932 | .2094 | .1954 | .1814 | .1675 | .1535 | .1396 | .1256 | .1117 | .0977 | .0838 | .0698 | .0558 | .0419 | .0280 | .0139 | .0 |
| 20 | .8819 | .2067 | .1930 | .1791 | .1654 | .1516 | .1378 | .1240 | .1102 | .0965 | .0827 | .0689 | .0551 | .0414 | .0276 | .0138 | .0 |
| 21 | .8701 | .2040 | .1904 | .1767 | .1631 | .1496 | .1360 | .1223 | .1088 | .0952 | .0816 | .0680 | .0544 | .0408 | .0272 | .0136 | .0 |
| 22 | .8577 | .2010 | .1877 | .1742 | .1608 | .1474 | .1341 | .1206 | .1072 | **.0938** | .0805 | .0670 | .0536 | .0402 | .0268 | .0134 | .0 |

(continued)

| rcosφ | j=0 | 49 | 50 | 51 | 52 | 53 | 54 | 55 | 56 | 57 | 58 | 59 | 60 | 61 | 62 | 63 | 64 |
|---|---|---|---|---|---|---|---|---|---|---|---|---|---|---|---|---|---|
| 23 | .8449 | .1980 | .1849 | .1716 | .1584 | .1452 | .1321 | .1187 | .1056 | .0924 | .0793 | .0660 | .0528 | .0396 | .0264 | .0132 | .0 |
| 24 | .8315 | .1949 | .1819 | .1689 | .1559 | .1429 | .1300 | .1169 | .1039 | .0910 | .0780 | .0649 | .0520 | .0390 | .0260 | .0130 | .0 |
| 25 | .8176 | .1916 | .1789 | .1661 | .1533 | .1405 | .1278 | .1149 | .1022 | .0894 | .0767 | .0639 | .0511 | .0383 | .0256 | .0128 | .0 |
| 26 | .8032 | .1883 | .1757 | .1631 | .1506 | .1381 | .1255 | .1128 | .1004 | .0879 | .0753 | .0627 | .0502 | .0377 | .0251 | .0125 | .0 |
| 27 | .7883 | .1848 | .1724 | .1601 | .1478 | .1355 | .1232 | .1108 | .0985 | .0862 | .0739 | .0616 | .0493 | .0370 | .0247 | .0123 | .0 |
| 28 | .7730 | .1812 | .1691 | .1570 | .1449 | .1329 | .1208 | .1087 | .0966 | .0846 | .0725 | .0604 | .0483 | .0363 | .0242 | .0121 | .0 |
| 29 | .7572 | .1775 | .1657 | .1538 | .1420 | .1302 | .1184 | .1065 | .0947 | .0828 | .0710 | .0591 | .0473 | .0355 | .0237 | .0118 | .0 |
| 30 | .7410 | .1737 | .1621 | .1505 | .1389 | .1274 | .1158 | .1042 | .0926 | .0811 | .0695 | .0579 | .0463 | .0348 | .0232 | .0116 | .0 |
| 31 | .7242 | .1698 | .1585 | .1470 | .1358 | .1245 | .1132 | .1018 | .0905 | .0792 | .0679 | .0565 | .0453 | .0340 | .0227 | .0113 | .0 |
| 32 | .7071 | .1657 | .1547 | .1436 | .1326 | .1216 | .1105 | .0994 | .0884 | .0774 | .0663 | .0552 | .0442 | .0332 | .0221 | .0110 | .0 |
| 33 | .6895 | .1616 | .1509 | .1400 | .1293 | .1185 | .1078 | .0969 | .0862 | .0754 | .0647 | .0538 | .0431 | .0323 | .0216 | .0108 | .0 |
| 34 | .6716 | .1574 | .1469 | .1364 | .1259 | .1154 | .1063 | .0944 | .0840 | .0735 | .0630 | .0525 | .0420 | .0315 | .0210 | .0105 | .0 |
| 35 | .6532 | .1531 | .1429 | .1327 | .1225 | .1123 | .1021 | .0918 | .0817 | .0715 | .0613 | .0510 | .0408 | .0306 | .0204 | .0102 | .0 |
| 36 | .6344 | .1487 | .1388 | .1288 | .1190 | .1091 | .0992 | .0892 | .0793 | .0691 | .0595 | .0495 | .0397 | .0298 | .0199 | .0099 | .0 |
| 37 | .6152 | .1442 | .1346 | .1249 | .1154 | .1058 | .0962 | .0865 | .0769 | .0673 | .0577 | .0480 | .0385 | .0289 | .0193 | .0096 | .0 |
| 38 | .5957 | .1396 | .1303 | .1210 | .1117 | .1024 | .0931 | .0838 | .0745 | .0652 | .0559 | .0465 | .0372 | .0279 | .0186 | .0093 | .0 |
| 39 | .5758 | .1350 | .1260 | .1169 | .1080 | .0990 | .0900 | .0810 | .0720 | .0628 | .0540 | .0450 | .0360 | .0270 | .0180 | .0090 | .0 |
| 40 | .5556 | .1302 | .1216 | .1128 | .1042 | .0955 | .0868 | **.0781** | .0695 | .0608 | .0521 | .0434 | .0347 | .0261 | .0174 | .0087 | .0 |
| 41 | .5350 | .1254 | .1171 | .1087 | .1003 | .0920 | .0836 | .0752 | .0669 | .0585 | .0502 | .0418 | .0334 | .0251 | .0167 | .0083 | .0 |
| 42 | .5141 | .1205 | .1125 | .1044 | .0964 | .0884 | .0804 | .0723 | .0643 | .0562 | .0482 | .0402 | .0321 | .0241 | .0161 | .0080 | .0 |
| 43 | .4929 | .1155 | .1078 | .1001 | .0924 | .0847 | .0770 | .0693 | .0616 | .0537 | .0462 | .0385 | .0308 | .0231 | .0154 | .0077 | .0 |

(continued)

| rcosφ | j=0 | 49 | 50 | 51 | 52 | 53 | 54 | 55 | 56 | 57 | 58 | 59 | 60 | 61 | 62 | 63 | 64 |
|---|---|---|---|---|---|---|---|---|---|---|---|---|---|---|---|---|---|
| 44 | .4714 | .1105 | .1031 | .0957 | .0884 | .0810 | .0737 | .0663 | .0589 | .0516 | .0442 | .0368 | .0295 | .0221 | .0148 | .0074 | .0 |
| 45 | .4496 | .1054 | .0984 | .0913 | .0843 | .0773 | .0703 | .0632 | .0562 | .0492 | .0422 | .0351 | .0281 | .0211 | .0141 | .0070 | .0 |
| 46 | .4276 | .1002 | .0936 | .0911 | .0802 | .0735 | .0668 | .0601 | .0535 | .0468 | .0401 | .0334 | .0267 | .0201 | .0134 | .0067 | .0 |
| 47 | .4052 | .0950 | .0887 | .0823 | .0760 | .0697 | .0633 | .0570 | .0507 | .0443 | .0380 | .0316 | .0253 | .0190 | .0127 | .0063 | .0 |
| 48 | .3827 | .0897 | .0837 | .0777 | .0718 | .0658 | .0598 | .0538 | .0478 | .0419 | .0359 | .0299 | .0239 | .0179 | .0120 | .0060 | .0 |
| 49 | .3599 | .0844 | .0787 | .0731 | .0675 | .0619 | .0563 | .0506 | .0450 | .0393 | .0338 | .0281 | .0225 | .0169 | .0113 | .0056 | .0 |
| 50 | .3369 | .0790 | .0737 | .0684 | .0632 | .0579 | .0527 | .0474 | .0421 | .0369 | .0316 | .0263 | .0211 | .0158 | .0105 | .0053 | .0 |
| 51 | .3137 | .0735 | .0686 | .0637 | .0588 | .0539 | .0490 | .0441 | .0392 | .0343 | .0294 | .0245 | .0196 | .0147 | .0098 | .0049 | .0 |
| 52 | .2903 | .0680 | .0635 | .0590 | .0544 | .0499 | .0454 | .0408 | .0363 | .0318 | .0272 | .0227 | .0181 | .0136 | .0091 | .0045 | .0 |
| 53 | .2667 | **.0625** | .0584 | .0542 | .0500 | .0458 | .0417 | .0375 | .0333 | .0292 | .0250 | .0208 | .0167 | .0125 | .0084 | .0042 | .0 |
| 54 | .2430 | .0570 | .0532 | .0494 | .0456 | .0418 | .0380 | .0342 | .0304 | .0266 | .0228 | .0190 | .0152 | .0114 | .0076 | .0038 | .0 |
| 55 | .2191 | .0514 | .0479 | .0445 | .0411 | .0377 | .0342 | .0308 | .0274 | .0240 | .0206 | .0171 | .0137 | .0103 | .0069 | .0034 | .0 |
| 56 | .1951 | .0457 | .0427 | .0396 | .0366 | .0335 | .0305 | .0274 | .0293 | .0213 | .0183 | .0152 | .0122 | .0092 | .0061 | .0030 | .0 |
| 57 | .1710 | .0401 | .0374 | .0347 | .0321 | .0294 | .0267 | .0240 | .0214 | .0187 | .0160 | .0134 | .0107 | .0080 | .0054 | .0027 | .0 |
| 58 | .1467 | .0344 | .0321 | .0298 | .0275 | .0252 | .0229 | .0206 | .0183 | .0160 | .0138 | .0115 | .0092 | .0069 | .0046 | .0023 | .0 |
| 59 | .1224 | .0287 | .0268 | .0249 | .0230 | .0210 | .0191 | .0172 | .0153 | .0134 | .0115 | .0096 | .0077 | .0057 | .0038 | .0019 | .0 |
| 60 | .0980 | .0230 | .0214 | .0199 | .0184 | .0168 | .0155 | .0138 | .0123 | .0107 | .0092 | .0077 | .0061 | .0046 | .0031 | .0015 | .0 |
| 61 | .0736 | .0173 | .0161 | .0149 | .0138 | .0127 | .0115 | .0103 | .0092 | .0081 | .0069 | .0057 | .0046 | .0035 | .0023 | .0011 | .0 |
| 62 | .0491 | .0115 | .0107 | .0100 | .0092 | .0084 | .0077 | .0069 | .0061 | .0054 | .0046 | .0038 | .0031 | .0023 | .0015 | .0008 | .0 |
| 63 | .0245 | .0057 | .0054 | .0050 | .0046 | .0042 | .0038 | .0034 | .0031 | .0027 | .0023 | .0019 | .0015 | .0011 | .0008 | .0004 | .0 |
| 64 | .0 | | | | | | | | | | | | | | | | |

Table 2:θ = 0, r (j') = 1- j'/64, r (j) cos (i180°/128), j'= 0, ..64, j = 0, ..64, i = 0, .. 64

Table 2a: No coincidence of r (j') with r (j) cos (i180*/128)

j = 0, 2, 4, 5, 7, 8, 9, 11, 13, 14, 16, 18, 20, 21, 22, 24, 25, 26, 27, 32, 36, 37, 40, 41, 42, 43, 44, 45, 47, 48, 50, 51, 52, 53, 54, 56, 58, 59, 60, 61, 62, 63.

Table 2b: 1 coincidence of r (j') with r (j) cos (i180°/128)

| j' | j | i |
|----|----|----|
| 29 | 1 | 40 |
| 15 | 3 | 26 |
| 32 | 15 | 35 |
| 36 | 17 | 38 |
| 44 | 28 | 40 |
| 32 | 29 | 17 |
| 32 | 30 | 14 |
| 55 | 33 | 52 |
| 56 | 34 | 53 |
| 43 | 35 | 31 |
| 48 | 38 | 37 |
| 55 | 39 | 49 |
| 54 | 46 | 40 |
| 60 | 49 | 53 |
| 59 | 55 | 40 |
| 58 | 57 | 22 |

Table 2c: 2 coincidences of r (j') with r (j) cos (i180°/128)

| j' | j | i |
|----|----|----|
| 22 | 6 | 31 |
| 24 | 6 | 33 |
| 12 | 10 | 11 |
| 34 | 10 | 40 |
| 39 | 19 | 40 |
| 52 | 19 | 53 |
| 24 | 23 | 9 |
| 56 | 23 | 56 |
| 32 | 31 | 10 |
| 45 | 31 | 39 |

Table 2d: 4 coincidences of r (j') with r (j) cos (i180°/128):

| j' | j | i |
|----|----|----|
| 13 | 12 | 8 |
| 17 | 12 | 18 |
| 23 | 12 | 27 |
| 31 | 12 | 36 |

**Claims**

1.  Image reconstruction method with projection reconstruction, which is **characterized by** projection to a parameter space, called the Radon space, in which space each point of the object to be imaged, with its radius and proper weight, is represented by the cosine of the polar angle of the corresponding Radon slice relative to the polar angle of the point of the object and the set of weighted cosines for all the points is represented by a cosinogram in the Radon space.
    The image reconstruction is then obtained by sequential scanning of the cosinogram, from large to small absolute value of the radial coordinate, to determine the maximum or minimum of the cosines having the coordinates of the object points with their weights, as the image points, while removing the remainder of the cosines from the cosinogram, to clean up for the subsequent scans, until the last scan.

2.  The method of claim 1, in which the image reconstruction is obtained with the cosine functions calculated, reducing computation by two orders of magnitude, compared to usual back projection, by exploiting the radial and angular relationships of the points on subsequent Radon slices, to determine the coincidences and to program the deletions of the remainder of the cosines from the cosinogram, thus to speed up the image reconstruction, by two orders of magnitude.

3.  An apparatus for image reconstruction, in which the method of claims and/or 2 are used, with the calculated cosine functions stored on a template to be used in programmable or programmed forms, to further speed up the image reconstruction.

4.  The method of any of the claims 1, 2 and 3 applied to X-CT, PET, SPECT, MRI, to passive and active synthetic aperture radiometry, like radar, and derived methods like ultrasound and OCT.

5.  The method of claim 1, in which a unique point in a parameter space is identified with the object point, from which the corresponding image can be reconstructed, and deleting the remainder of the projection of the object point from the parameter space.

**Amended claims in accordance with Rule 137(2) EPC.**

1. Image reconstruction with projection into the Radon space, in which each point of the object, with its radius and proper weight, is represented by the cosine of the polar angle of the Radon slice relative to the polar angle of the point of the object,
**characterized by** object points on intersections of radials and concentric circles on a polar grid in object space and identifying the image point of each object point as the maximum, or minimum, of the cosine in the Radon space, and deleting the remainder of the cosine from the coincidences with other image points.

2. The method of claim 1, in which points in Radon space in coincidence with the cosines of other points are substituted by the average of non-coinciding neighbouring points, for simultaneous acquisition and reconstruction.

3. An apparatus for image reconstruction, in which the method of claims and/or 2 are used.

4. The method of any of the claims 1, 2 and 3, combined with fast acquisition rotating field gradient MRI and similar ones in X-CT, PET, SPECT, passive and active synthetic aperture radiometry.

**5.** The method of claim 1 and 2, in which a unique point in a parameter space is identified with the object point, from which the corresponding image can be reconstructed.

Fig. 1

Fig. 2a

Fig. 2b

Fig. 2c: cosinogram in $R$

Fig. 2d: Image in $P$

Europäisches
Patentamt

European
Patent Office

Office européen
des brevets

# EUROPEAN SEARCH REPORT

Application Number

EP 09 07 5412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FRANCISCO J. CARAMELO, NUNO C. FERREIRA, LUIS FAZENDEIRO, CATARINA SOUTO: "Image Reconstruction by Sinogram Decomposition into Sinusoidal Curves" FULLY THREE-DIMENSIONAL IMAGE RECONSTRUCTION IN RADIOLOGY AND NUCLEAR MEDICINE, 6 July 2005 (2005-07-06), - 9 July 2005 (2005-07-09) pages 55-59, XP002564892 Salt Lake City, UTAH * figure 1 * * figure 2 * * Introduction * ----- | 1-5 | INV. G06T11/00 |
| X | CORMACK A M: "The Radon Transform on a Family of Curves in the Plane" PROCEEDINGS OF THE AMERICAN MATHEMATICAL SOCIETY, AMERICAN MATHEMATICAL SOCIETY, PROVIDENCE, RI, US, vol. 83, no. 2, 1 October 1981 (1981-10-01), pages 325-330, XP009128176 ISSN: 0002-9939 * Equation 1a * * abstract * * page 325, last paragraph - page 326, paragraph first * | 1,5 |  |
| X | & CORMACK A M: "The Radon Transform on a Family of Curves in the Plane. Part 2" PROCEEDINGS OF THE AMERICAN MATHEMATICAL SOCIETY, AMERICAN MATHEMATICAL SOCIETY, PROVIDENCE, RI, US, vol. 86, no. 2, 1 October 1982 (1982-10-01), pages 293-298, XP009128177 ISSN: 0002-9939 * Equation 1 * ----- | 1,5 | TECHNICAL FIELDS SEARCHED (IPC) G06T |

The present search report has been drawn up for all claims

| Place of search | Date of completion of the search | Examiner |
|---|---|---|
| Munich | 25 January 2010 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1995604 A
- US 3069654 A
- EP 07075385 A
- WO 9711387 A
- WO 1985005188 A
- CN 1782734
- US 20080007451 A

**Non-patent literature cited in the description**

- **Alan M. Cormack ; Sir Godfrey N.** *Hounsfield got the Nobel-prize for Medicine in 1979 for their work with Computed Tomography,* 1979
- **P. C. Lauterbur.** *Nature,* 1973, vol. 242, 190-191
- Image Formation by Induced Local Interactions: Examples Employing Nuclear Magnetic Resonance. *Nobel-prize for Medicine,* 2003
- **J. Radon.** Über die Bestimmung von Funktionen durch ihre Integralwerte längs gewisser Mannigfaltigkeiten. *Ber. Verh. Sächs. Akad. Wiss. Leipzig, Math.-Nat. kl.,* 1917, vol. 69, 262-277
- **R. O. Duda ; P. E. Hart.** Use of the Hough Transformation to detect lines and curves in pictures. *Comm. ACM,* 1972, vol. 15 (1), 11-15
- **P. Toft.** *The Radon Transform - Theory and Implementation, Ph.D. thesis Department of Mathematical Modelling,* 1996
- **A. L. Kesidis ; N. Papamarkos.** On the Inverse Hough Transform. *IEEE Transactions on Pattern Analysis and Machine Intelligence,* December 1999, vol. 21 (12), 1-15
- **A. L. Kesidis ; N. Papamarkos.** A window-based inverse Hough Transform. *Pattern Recognition,* 2000, vol. 33, 1105-1117
- **Mensa.** High resolution radar imaging. Artech House, 1981
- Processing of SAR Data: Fundamentals. **H. Achim.** Signal Processing, Interferometry. Springer, 2004
- **C. S. Ruf ; C. T. Swift ; A. B. Tanner ; D. M. Le Vine.** Interferometric synthetic aperture microwave radiometry for the remote sensing of the earth. *IEEE Trans. G. R. S.,* 1988, vol. 26 (9), 597-611
- **M. Peichl ; S. Dill ; M. Jirousek ; H. Suess.** *Proceedings of WFMN07 II C1,* 2007, 75-83
- **C. Chang ; J. Wu ; W. Sun.** Applications of Pseudo-polar FFT in Synthetic Aperture Radiometer Imaging. *PIERS,* 2007, vol. 3 (1), 25-30